Europäisches Patentamt

European Patent Office

Office européen des brevets

(11) Numéro de publication : **0 155 425**
**B1**

(12) **FASCICULE DE BREVET EUROPÉEN**

(45) Date de publication du fascicule du brevet :
**02.03.88**

(21) Numéro de dépôt : **84402415.8**

(22) Date de dépôt : **27.11.84**

(51) Int. Cl.⁴ : **F 02 D 41/10**, F 02 D 41/12,
F 02 P 5/04

(54) Dispositif de coupure de l'alimentation et de réalimentation en carburant pendant les phases de décélération d'un moteur à combustion interne.

(30) Priorité : **07.12.83 FR 8319550**

(43) Date de publication de la demande :
**25.09.85 Bulletin 85/39**

(45) Mention de la délivrance du brevet :
**02.03.88 Bulletin 88/09**

(84) Etats contractants désignés :
**DE FR GB IT SE**

(56) Documents cités :
**DE-A- 3 035 245**
**FR-A- 2 371 580**
**FR-A- 2 511 430**
**GB-A- 2 043 772**
**US-A- 3 866 584**
**US-A- 4 259 723**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Le Prêtre, Bernard**
**13, rue Mollien**
**F-92100 Boulogne Billancourt (FR)**
Inventeur : **Rousseau, Christian**
**33, rue de la Mutualité**
**F-92160 Antony (FR)**

Jouve, 18, rue St-Denis, 75001 Paris, France

## Description

La présente invention concerne un dispositif de coupure de l'alimentation et de réalimentation en carburant pendant les phases de décélération d'un moteur à combustion interne.

Il est connu d'interrompre l'arrivée du carburant dans un moteur lorsque le régime de ce dernier est supérieur à un seuil donné alors que l'accélérateur est complètement relâché, et de rétablir l'alimentation en carburant du moteur au-dessus du régime de ralenti pour éviter le calage. Cette interruption momentanée de l'alimentation permet de diminuer la consommation en carburant et les émanations de produits polluants du moteur.

La demande de brevet français FR-A-2 511 430 décrit un tel dispositif du type comprenant un organe d'interruption de l'alimentation en carburant du moteur, des moyens de mesure du régime du moteur, des moyens de détection de décélération du moteur, des moyens de comparaison du régime du moteur à au moins un premier seuil et dont l'état logique de sortie dépend du résultat de la comparaison, un circuit logique qui reçoit, d'une part, l'état logique de sortie des moyens de comparaison et, d'autre part, un signal logique représentatif d'un fonctionnement en décélération ou non du moteur délivré par les moyens de détection de décélération et qui commande l'interruption de l'alimentation du moteur par l'organe d'interruption lorsque le régime du moteur est supérieur audit seuil et que le moteur est en décélération, et la réalimentation en carburant du moteur lorsque son régime descend au-dessous du premier seuil.

Dans le cas où le moteur est équipé d'un système d'injection électronique, la partie électronique d'un tel dispositif peut être intégrée moyennant un faible coût au calculateur électronique du système d'injection, soit sous forme de logique câblée, soit sous forme de logiciel.

Par contre, les réalisations connues de dispositifs du type précité appliquées à des moteurs à carburateur ou à système d'injection non électronique nécessitent de recourir à des circuits électroniques supplémentaires câblés ou programmables dont le coût n'est pas négligeable comparativement à celui du système d'alimentation en carburant du moteur.

L'invention vise à offrir une solution qui permette de réaliser un tel dispositif à un moindre coût dans le cas d'un moteur à combustion interne équipé d'un calculateur électronique d'allumage, sans altération fondamentale de ce dernier. Le problème à résoudre peut se poser dans l'hypothèse d'un calculateur électronique d'allumage programmable dont la puissance est insuffisante pour lui permettre d'effectuer des calculs autres que ceux auxquels il est consacré, mais on le rencontre plus particulièrement en présence d'un calculateur électronique d'allumage spécifique dont les tâches qu'il doit remplir ont été figées dès la conception et ne peuvent être accrues sans une modification à un coût prohibitif de son architecture.

Suivant l'invention, le problème posé est résolu au moyen d'un dispositif du type précité associé à un moteur à combustion interne à calculateur électronique d'allumage, comprenant un organe (103) d'interruption de l'alimentation en carburant du moteur, des moyens (49, 50) de mesure du régime du moteur, des moyens (106) de détection de décélération du moteur des moyens (53) de comparaison du régime ($\omega$) du moteur à au moins un premier seuil ($\omega_1$) et dont l'état logique de sortie ($B_1$) a la valeur « 1 » pour des régimes ($\omega$) inférieurs au seuil ($\omega_1$) et la valeur « 0 » pour des régimes supérieurs à ($\omega_1$), un circuit logique (100-102) qui reçoit, d'une part, l'état logique de sortie des moyens de comparaison (53) et, d'autre part, un signal logique représentatif d'un fonctionnement en décélération ou non du moteur délivré par les moyens (106) de détection de décélération et qui commande l'interruption de l'alimentation du moteur par l'organe d'interruption (103) lorsque le régime ($\omega$) du moteur est supérieur audit seuil ($\omega_1$) et que le moteur est en décélération et la réalimentation en carburant du moteur lorsque son régime ($\omega$) descend au-dessous du premier seuil ($\omega_1$), caractérisé en ce que lesdits moyens de comparaison sont constitués par une mémoire morte (53) de cartographie d'avance du calculateur électronique d'angle d'avance à l'allumage comprenant lesdits moyens (49, 50) de mesure de la vitesse du moteur, qui contient à chaque emplacement adressable en fonction de la vitesse du moteur un nombre binaire pour le calcul de l'angle d'avance à l'allumage et au moins un premier chiffre binaire ($B_1$) dont la valeur définit ledit état logique appliqué au circuit logique (100-102).

Grâce à cet agencement, le nombre de composants du dispositif est réduit au minimum puisque les moyens de mesure du régime du moteur sont ceux dont est nécessairement équipé le calculateur d'allumage et les moyens de comparaison entre le régime du moteur et le seuil sont réalisés par une simple programmation d'un chiffre binaire à chaque emplacement adressé en vitesse de la mémoire morte de cartographie d'avance. Cette programmation présente un coût négligeable puisqu'elle est effectuée simultanément avec celle de la cartographie d'avance lors du masquage du calculateur.

Suivant un mode préféré de réalisation dans lequel le circuit logique reçoit des moyens de comparaison un second état logique fonction de la comparaison entre le régime du moteur et un second seuil supérieur au premier seuil, le second état logique est défini par un second chiffre binaire également emmagasiné à chaque emplacement de la mémoire morte contenant un nombre binaire pour le calcul de l'angle d'avance à l'allumage et ledit circuit logique est adapté pour n'autoriser l'interruption de l'alimentation du moteur par ledit organe d'interruption entre les premier et second seuils qu'en réponse à la détection du passage du moteur d'une phase d'accélération à une phase de décélération par lesdits moyens de détection de décélération.

Ce mode de réalisation permet, au moyen d'un seul chiffre binaire supplémentaire programmé en mémoire morte, de mettre en oeuvre une stratégie de coupure en décélération et réalimentation sensiblement plus élaborée.

Suivant une caractéristique le circuit logique comprend une bascule D aux entrées R et S de laquelle sont appliqués lesdits chiffres binaires, dont l'entrée d'horloge reçoit des moyens de détection de décélération le niveau logique représentatif d'un fonctionnement du moteur en décélération ou non et dont l'entrée D reçoit un niveau logique prédéterminé.

De préférence, ladite bascule D est connectée à un étage de puissance pour l'actionnement dudit organe d'interruption par l'intermédiaire d'une porte NAND dont une première entrée est connectée à la sortie Q de la bascule D et dont la seconde entrée est connectée à l'entrée d'horloge CK de la bascule et reçoit dudit organe détecteur le niveau logique représentatif de la position de la pédale d'accélérateur. Le circuit logique est donc constitué d'un nombre minimal de composants qui peuvent être adjoints au calculateur d'allumage pour un faible coût.

D'autres caractéristiques et avantages de l'invention ressortiront de la description qui va suivre d'un mode de sa réalisation donné uniquement à titre d'exemple et illustré par les dessins annexés sur lesquels :

- la figure 1 représente sous forme de schéma-bloc un exemple de réalisation d'un calculateur d'avance à l'allumage ;

- la figure 2 représente un mode de réalisation détaillé du calculateur de la figure 1 incorporant le dispositif de coupure d'essence en décélération ainsi que le dispositif de réalimentation en essence ;

- la figure 3 est un diagramme de la vitesse de rotation $\omega$ du moteur en fonction du temps t qui montre des seuils $\omega_2$ et $\omega_1$ ainsi qu'un exemple de profil de décélération.

Les mêmes références numériques désignent les mêmes éléments sur les différentes figures.

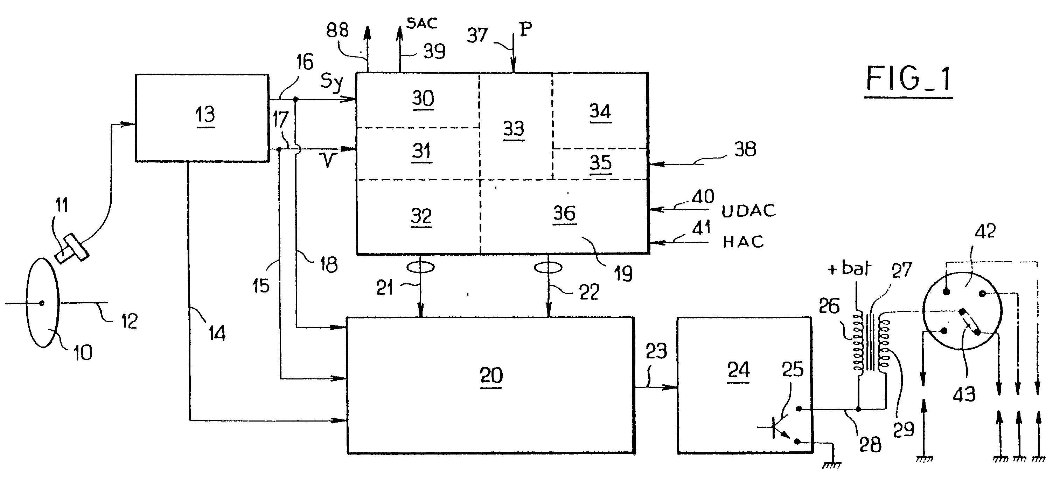

La figure 1 représente, sous forme de schéma-bloc, un exemple de réalisation d'un calculateur d'avance à l'allumage 19 qui reçoit, sur une entrée 16, un signal de synchronisation $S_y$ et, sur une seconde entrée 17, un signal vitesse V, signaux qui sont obtenus à partir d'un étage de traitement 13 du signal prélevé par un capteur 11 de position détectant le passage des dents dont est munie à sa périphérie une cible 10 fixée sur le vilebrequin 12 du moteur à combustion interne et tournant en synchronisme avec lui. Le capteur 11 donne une image électrique permanente de la périphérie de la cible. Cet ensemble a été décrit dans le EP-A-0 013 846.

Les parties essentielles du calculateur 19 sont les suivantes : un séquenceur 30 délivrant notamment une information d'envoi de correction SAC d'avance à l'allumage en fonction du cliquetis par un conducteur de sortie 39 ; un étage de mesure de la vitesse 31 ; une mémoire morte 32 ; un étage de mesure de pression 33 raccordé à un capteur de pression extérieur par un conducteur d'entrée 37 ; un étage de sécurité 34 pour se prémunir contre tout incident de fonctionnement du calculateur 19 ; un étage de corrections 35 relié au moins par un conducteur d'entrée 38 à au moins un capteur extérieur à fonction binaire et un étage 36 de calcul proprement dit de l'angle d'avance à l'allumage recevant des informations de correction de l'angle d'avance en fonction du cliquetis par une entrée 41 d'impulsions série HAC et une entrée 40 de signe de correction d'avance en fonction du cliquetis UDAC.

Le calculateur 19 délivre par ses sorties respectives 21 et 22 deux nombres binaires qui correspondent respectivement à l'angle de mise en conduction de la bobine 27 exprimé en nombre de dents de la cible 10 sur sa sortie 21 et à l'angle d'avance à l'allumage exprimé en nombre de dents de la cible 10 et en nombre de subdivisions d'entre deux dents de ladite cible sur sa sortie 22. Ces deux nombres binaires parviennent par les conducteurs 21 et 22 en entrée sur un bloc 20 de génération du signal de commande de la bobine 27 ; le bloc 20 reçoit aussi en entrée trois signaux par les conducteurs 14, 15 et 18 qui sont respectivement les dents de la cible 10 par 14, le signal de vitesse 15 qui est obtenu par les subdivisions d'entre deux dents de la cible 10 et le signal de synchronisation 18. Le bloc de génération 20 du signal de commande de la bobine fournit sur sa sortie 23 un signal de faible puissance qui est transmis à un étage de puissance amplificateur 24 dont la sortie 28 est reliée à la bobine d'allumage 27 ayant un enroulement primaire 26 et un enroulement secondaire 29 relié par une de ses extrémités à la partie centrale d'un distributeur 42, autour de laquelle tourne le bras mobile 43 qui met successivement en communication, au cours de sa rotation, le secondaire 29 de la bobine d'allumage 27 avec les bougies des différents cylindres du moteur pour provoquer l'explosion et la combustion du mélange contenu dans les cylindres. Ce dernier ensemble, comprenant le bloc 20 de génération du signal de commande de la bobine 27 et l'étage amplificateur de puissance 24, a été décrit dans la demande de brevet français 2 474 597.

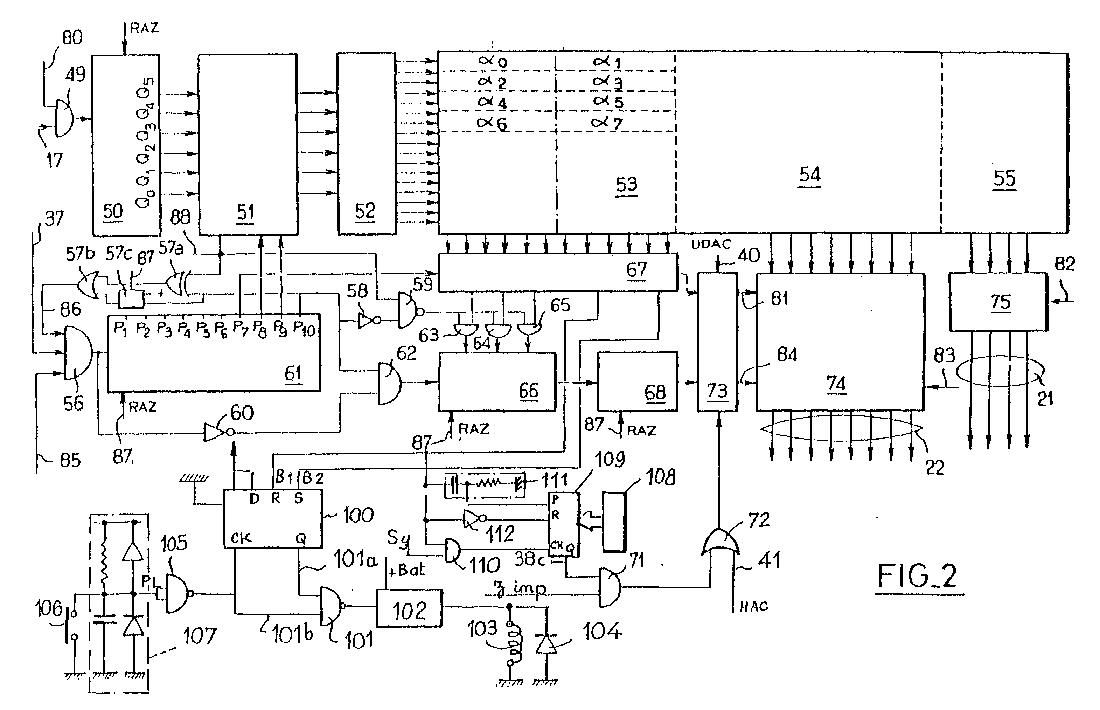

La figure 2 représente un mode de réalisation plus détaillé de l'étage de calcul proprement dit de l'angle d'avance à l'allumage désigné par la référence 19 à la figure 1, sans les éléments 30 et 34.

Cet étage de calcul comprend tout d'abord un compteur de vitesse 50 dans lequel on entre par l'intermédiaire d'une porte logique 49 à fonction ET connectée par une entrée au conducteur 17 transmettant le signal vitesse en provenance de l'étage de traitement 13 et recevant, par une seconde entrée 80, un créneau de mesure de vitesse sous la forme d'un signal de commande issu du séquenceur 30 de la figure 1 permettant une mesure pendant un temps déterminé par ledit séquenceur avec une valeur d'incrément de 100 tours/min. Le compteur 50 est, par exemple, un compteur à six chiffres binaires se verrouillant à sa valeur maximale dans le cas d'une mesure de vitesse supérieure à 6 300 tours/min. Le compteur de vitesse 50 est connecté par les sorties $Q_0$ à $Q_5$ aux entrées d'un codeur d'adressage 51 qui est connecté par ses sorties aux entrées d'un décodeur d'adresse 52. Ledit codeur d'adressage 51 peut être de type logique câblée ou bien de type programmé et la résolution de ce codeur peut être variable suivant les applications moteur. En effet, dans certaines zones d'utilisation, il peut être souhaitable d'utiliser un pas de codage de 100 tours/min, alors que dans d'autres, on peut utiliser un codage tous les 200 tours/min, 400 tours/min ou même 800 tours/min.

La mémoire morte désignée par la référence 32 à la figure 1 comprend, dans la présente réalisation de la figure 2, trois parties essentielles, à savoir : une première mémoire morte 53 renfermant les coefficients de correction d'avance proprement dits ; une seconde mémoire morte 54 d'avance pleine charge et une troisième mémoire morte 55 d'angle de conduction ou de temps de conduction. Ces trois mémoires mortes 53, 54 et 55 sont adressées soit directement pour les mémoires 54 et 55 par le compteur de vitesse 50 indiquant des vitesses entre zéro et 6 300 tours/min par l'intermédiaire du codeur d'adressage 51 et du décodeur d'adresse 52, soit indirectement pour la mémoire 53 par l'intermédiaire du codeur 51 faisant alors intervenir les quatre lignes de poids fort de la vitesse et deux chiffres pression. Les coefficients de correction d'avance dans la mémoire morte 53 sont codés sur trois chiffres binaires plus un chiffre binaire de signe pour la charge et deux chiffres binaires dont la fonction sera explicitée dans la suite de la description, chaque double groupe de six chiffres binaires ainsi défini pouvant être adressé et réparti différemment suivant les cas d'utilisation moteur.

La mémoire morte 54 représentant l'avance pleine charge est définie par huit chiffres binaires, le chiffre de plus faible poids valant un degré volant moteur et mémorisé en même temps que la valeur représentative du temps de conduction dans le compteur 74.

La troisième mémoire morte 55 dite de temps de conduction est connectée par ses sorties à une bascule à verrouillage 75 (Latch) mémorisant sur quatre chiffres binaires la valeur d'angle de conduction fournie par la mémoire 55 et transmise ultérieurement sur les sorties 21 au circuit 20 de la figure 1 générateur du signal de commande de la bobine 27.

La seconde mémoire morte 54 dite d'avance pleine charge est connectée par ses sorties à un compteur/décompteur 74 du calcul d'avance mémorisant sur huit chiffres binaires la valeur d'avance à l'allumage qui est transmise ultérieurement par ses sorties 22 au circuit 20 de la figure 1.

Les sorties 21 de la bascule 75 et 22 du compteur 74 correspondent aux conducteurs 21 et 22 illustrés à la figure 1. Le compteur/décompteur 74 possède une première entrée 81 de comptage/décomptage, une seconde entrée horloge 84 et une entrée de chargement 83. La bascule à verrouillage 75 possède une entrée de chargement 82.

L'étage de calcul suivant la présente invention comprend par ailleurs un compteur de pression 61 qui, dans le mode de réalisation illustré, est un compteur à dix chiffres binaires synchrones du signal fréquence correspondant à la pression régnant dans le collecteur d'admission du moteur à combustion interne. Ce signal de pression parvient au compteur 61 pendant le créneau de mesure de pression en provenance du séquenceur 30 de la figure 1 par un premier conducteur 85, par l'intermédiaire d'une porte logique 56 à fonction ET qui est connectée par une seconde entrée au second conducteur 37 de la figure 1 raccordé au capteur de mesure de la pression régnant dans le collecteur d'admission et par un troisième conducteur 86 à un ensemble de portes 57a, 57b, 57c transmettant un signal de limitation de capacité et de synchronisation. L'ensemble de portes comprend une première porte logique 57a à fonction OU EXCLUSIF connectée par une de ses entrées à une sortie du codeur d'adressage 51, par une seconde entrée à la sortie $P_{10}$ du compteur de pression 61 et par sa sortie à une entrée de la seconde porte logique 57b à fonction OU qui est connectée par sa sortie 86 à une entrée de la porte logique 56 à fonction ET rencontrée précédemment.

La seconde entrée de la porte logique 57b est connectée à la sortie $\bar{Q}$ d'une bascule 57c de type D dont l'entrée D est reliée au plus batterie, dont l'entrée horloge est reliée à la sortie $P_{10}$ du compteur de pression 61 et dont l'entrée de remise à zéro est connectée à la remise à zéro 87 d'un multiplicateur de rythme binaire 66. Le compteur de pression 61 comporte dix sorties numérotées de $P_1$ à $P_{10}$. Les sorties $P_8$ et $P_9$ sont connectées en parallèle à des entrées du codeur d'adressage 51.

La sortie $P_{10}$, en plus de ses connexions à la porte logique 57a et à la bascule 57c, est connectée, d'une part, à une première entrée d'une porte logique 59 à fonction NON - ET par l'intermédiaire d'un inverseur 58, d'autre part, à une première entrée d'une porte logique 62 à fonction ET, cette dernière connectée par une seconde entrée à la sortie de la porte logique 56 à fonction ET déjà rencontrée par l'intermédiaire d'un inverseur 60, et par ailleurs, par sa sortie à une entrée du multiplicateur de rythme binaire 66 déjà mentionné. La sortie $P_7$ du compteur de pression 61 est connectée à une entrée de déclenchement d'un étage 67 de choix de coefficient qui est connecté, par ailleurs, par sa série d'entrées supérieures aux sorties de la mémoire morte 53 dans laquelle sont emmagasinés les coefficients de correction d'avance par deux groupes de six chiffres binaires comme précédemment men

tionné. Cet étage 67 de choix de coefficient est connecté par trois premières sorties en parallèle sur les premières entrées de trois portes logiques 63, 64, 65 à fonction ET connectées toutes les trois en parallèle par leur seconde entrée à la sortie de la porte logique 59 à fonction NON - ET et par leurs sorties en parallèle sur trois entrées du multiplicateur de rythme binaire 66 pour y introduire les trois chiffres binaires du coefficient de correction d'avance sélectionné dans la mémoire morte 53. La seconde entrée de la porte logique 59 à fonction NON - ET est connectée à une sortie du codeur d'adressage 51 et à une entrée de la porte logique 57a à fonction OU EXCLUSIF. La sortie latérale droite de l'étage 67 de choix du coefficient est reliée à l'entrée « SIGNE » d'un étage 73 permettant de déterminer le signe de la correction pression. Sur une seconde entrée, l'étage 73 est relié au conducteur 40 déjà mentionné à la figure 1 pour recevoir un signal UDAC, à savoir le signe de correction d'avance en fonction du cliquetis.

Revenant au multiplicateur de rythme binaire 66 portant sur trois chiffres binaires dans l'exemple représenté, la sortie de ce dernier est connectée à l'entrée d'un étage 68 diviseur par M qui, dans l'exemple représenté, est un diviseur par huit et dont la sortie est reliée à une seconde entrée de l'étage 73 ci-dessus mentionné. Cet étage 73 est connecté par sa troisième entrée située à sa partie inférieure à la sortie d'une porte logique 72 à fonction OU à deux entrées reliées respectivement à la sortie d'une porte logique 71 à fonction ET et au conducteur 41 apparaissant déjà à la figure 1 et qui transmet des impulsions série de correction d'avance à l'allumage en fonction du cliquetis, impulsions engendrées par l'horloge anticliquetis de l'installation. Sur la porte logique 71 à fonction ET, le conducteur supérieur 38c sert à véhiculer l'ordre de correction éventuel provenant de l'extérieur et le conducteur inférieur sert à recevoir z impulsions qui sont fournies par le séquenceur 30 de la figure 1. L'étage 73 permettant de déterminer « le type de correction pression-correction externe anticliquetis » est connecté par ses deux sorties 81 et 84 respectivement à l'entrée de comptage/décomptage et à l'entrée horloge du compteur du calcul d'avance 74 à huit chiffres binaires. Le compteur 74 et la bascule à verrouillage 75 ont des entrées de chargement numérotées respectivement 83 et 82 connectée au séquenceur 30 de la figure 1.

Le calculateur d'avance à l'allumage décrit jusqu'à présent en regard des figures 1 et 2 est identique à celui objet de EP-A-0 043 053 à ceci près qu'il ne comporte aucune porte d'entrée de correction conditionnelle. La description détaillée de certains des circuits du calculateur et de son fonctionnement ne sera donc pas reprise et on pourra se reporter à cet effet à la demande de brevet précitée. On rappellera simplement que les corrections diverses provenant de la porte 72 sont commandées par un organe externe en 38c et un capteur de cliquetis en 41. La valeur de la correction externe est fixée dans le séquenceur 30 par une porte laissant passer z impulsions lorsque l'organe externe indique en 38c un état nécessitant une correction bien définie.

Conformément à l'invention, les deux chiffres binaires disponibles $B_1$ et $B_2$ du groupe de six chiffres binaires programmé dans la mémoire 53 sont adressés respectivement vers les entrées R et S d'une bascule D 100 par l'intermédiaire de l'aiguilleur 67. Les bornes Q et CK de la bascule D 100 sont connectées respectivement aux entrées 101a et 101b d'une porte NAND 101 dont la sortie commande un étage de puissance 102. Cet étage de puissance 102 alimente l'enroulement 103 en parallèle avec une diode 104 d'une électrovanne (non représentée) qui commande l'alimentation en carburant du gicleur d'un carburateur (non représenté). L'entrée 101b de la porte NAND 101 est également connectée à la sortie d'une porte NAND 105 dont les deux entrées sont connectées par l'intermédiaire d'un circuit adaptateur 107 à des moyens de détection de décélération du moteur constitués, par exemple, par un contacteur électrique 106 lié au papillon des gaz ou à la pédale d'accélérateur. Le contacteur 106 est fermé en position « pied levé », c'est-à-dire en position sensiblement fermée du papillon des gaz, et ouvert dans le cas contraire.

Par ailleurs, l'entrée 38c de la porte ET 71 est reliée à la sortie Q d'un décompteur 109 à n basculeurs dont les entrées de changement sont connectées à un circuit de mémorisation 108. L'entrée d'horloge CK du décompteur 109 est connectée à la sortie d'une porte ET 110 dont l'une des entrées reçoit le signal $S_y$ (référence 16 à la figure 1) et l'autre entrée reçoit le signal $B_1$ qui est également appliqué à l'entrée P du décompteur 109 par l'intermédiaire d'un circuit dérivateur 111. Enfin, l'entrée R (« reset ») du décompteur 109 reçoit le signal $B_1$ inversé par un inverseur 112.

Les chiffres binaires $B_1$ et $B_2$ sont programmés dans la mémoire 53 en fonction de deux seuils de régime moteur $\omega_1$ et $\omega_2$ respectivement. Plus précisément, $B_1$ a la valeur « 1 » pour des régimes $\omega$ du moteur inférieurs à $\omega_1$ et la valeur « 0 » pour des régimes supérieurs à $\omega_1$. Inversement, $B_2$ prend la valeur « 0 » pour des régimes $\omega$ du moteur inférieurs à $\omega_2$ et la valeur « 1 » pour des régimes supérieurs à $\omega_2$. Ainsi, la mémoire 53 étant adressée à l'aide du séquenceur 51 avec une résolution de 100 tours/min, il est possible d'établir des zones de régime inférieures à $\omega_2$ où $B_2 = $ « 0 » et interdit la coupure de carburant en décélération dans certaines conditions qui seront expliquées plus avant, et d'autres zones de régime supérieures à $\omega_2$ où $B_2 = $ « 1 » et autorise cette même coupure. Il en va de même pour $\omega_1$ qui est le seuil de réalimentation en carburant. On réalise ainsi directement sous forme cartographique un moyen de comparaison entre le régime du moteur et les seuils $\omega_1$ et $\omega_2$.

Les signaux correspondant aux états logiques $B_1$ et $B_2$ entrent sur les entrées R et S de la bascule 100 et, ces dernières étant prioritaires lorsqu'elles sont à « 1 », elles affectent directement la sortie Q de la bascule.

Dans le cas d'une décélération où le régime ω est supérieur au seuil ω₂, l'entrée S de la bascule D est égale à « 1 » et la sortie Q aussi. Les entrées 101a et 101b sont donc à « 1 » si le contact 106 est fermé, ce qui se traduit par un « 1 » à la sortie de la porte 105. La sortie de la porte NAND 101 se trouve alors à « 0 » et l'étage de puissance 3 ne conduit pas. Dans ce cas l'organe de commande 103 n'est pas alimenté et il y a coupure de l'alimentation en carburant du moteur.

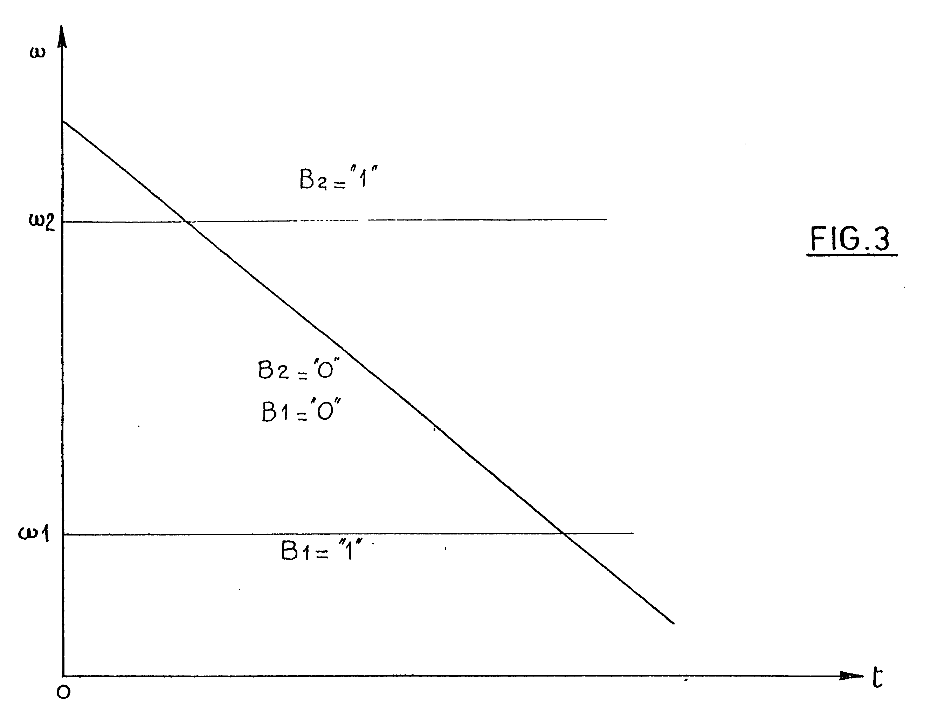

Dans le cas où le régime ω est inférieur au seuil ω₂ (figure 3), l'entrée S de la bascule 100 est égale à « 0 » et la sortie Q ne se trouve pas affectée par le changement d'état de « 1 » à « 0 » de cette entrée. S'il se produit alors un lâcher de la pédale d'accélérateur, la sortie de la porte NAND 105 passe de « 0 » à « 1 » et l'entrée D de la bascule 100, à laquelle est appliqué un niveau « 1 », est transférée sur la sortie Q. De ce fait, les entrées 101a et 101b se trouvent à « 1 », ce qui autorise une coupure de l'alimentation en carburant.

Lorsque le régime ω devient inférieur au seuil ω₁ (figure 3), l'entrée R passe de « 0 » à « 1 » et la sortie Q est affectée par ce changement d'état. L'entrée 101a passe à « 0 » et, comme la sortie de la porte 105 reste égale à « 1 » (pied levé), la sortie de la porte NAND 101 passe à « 1 ». Dans ce cas l'organe de commande 103 se trouve alimenté et la réalimentation en carburant est assurée.

Lors de la réalimentation en carburant du moteur, il peut se produire un « rebondissement » du régime dû à la reprise de la combustion, et de ce fait le régime ω peut repasser au-dessus du seuil de réalimentation ω₁ (figure 3). Le contact 106 étant toujours fermé, si le seuil ω₂ n'existait pas ou si ω₂ était égal à ω₁, le calculateur interprèterait cette remontée en régime comme une condition autorisant une nouvelle coupure de carburant en décélération, et nous serions en présence d'un phénomène de pompage naturel du moteur dû aux coupures et réalimentations successives.

Dans la forme de réalisation décrite, lorsque le régime ω descend en-dessous du seuil ω₁, l'entrée R de la bascule 100 passe de « 0 » à « 1 » (figure 2), tandis que sa sortie Q passe de « 1 » à « 0 ». Il y a alors réalimentation comme indiqué ci-dessus. Si le régime ω du moteur repasse alors au-dessus du seuil ω₁, l'entrée R repasse de « 1 » à « 0 », mais la sortie Q ne change pas d'état et reste à « 0 ». Pour que la sortie Q passe alors à « 1 », il faudrait alors, soit que le régime ω repasse au-dessus du seuil ω₂ ce qui ferait passer l'entrée S de « 0 » à « 1 », soit qu'il y ait eu un enfoncement de la pédale d'accélérateur suivi d'un nouveau lâcher de pied. Bien entendu, le seuil ω₂ est choisi de manière que le régime moteur ω ne puisse pas atteindre cette valeur, en l'absence d'action sur la pédale d'accélérateur, à la suite d'un « overshoot » de régime dû à la reprise de l'alimentation en carburant consécutivement à une coupure de celle-ci au seuil ω₁.

Enfin, lorsqu'à la suite d'une réalimentation en carburant consécutive au passage du régime ω en-dessous du seuil ω₁, ce régime ω repasse au-dessus du seuil ω₁ à cause d'une action sur la pédale d'accélérateur, tout en restant inférieur à ω₂, et qu'un lâcher de pied se produit à nouveau, le passage de « 0 » à « 1 » appliqué par la sortie de la porte 105 à l'entrée CK de la bascule 100 provoque le transfert de son entrée D à sa sortie Q, c'est-à-dire le passage de celle-ci de « 0 » à « 1 ». La sortie de la porte 101 passe alors à nouveau à « 0 », ce qui autorise une nouvelle coupure de l'alimentation en carburant.

Par conséquent, la zone comprise entre ω₂ et ω₁ est une zone de régime où il est impossible de réaliser des coupures successives sur variation du régime ω s'il n'y a pas eu de changement d'état du contacteur 106.

On décrira maintenant le fonctionnement du circuit 108-112 dont la présence est facultative et qui a pour but d'apporter une modification à la loi programmée d'avance à l'allumage lors de la réalimentation automatique en carburant du moteur en-dessous du seuil ω₁, notamment pour améliorer l'agrément de conduite pendant cette phase de fonctionnement.

Lorsque la vitesse du moteur devient inférieure à ω₁, il y a réalimentation du moteur, le signal B₁ passant de « 0 » à « 1 », et le circuit dérivateur 111 applique à l'entrée P du décompteur 109 une impulsion qui provoque le chargement du contenu du circuit de mémorisation 108 dans le décompteur 109 et le passage de la sortie Q de ce dernier de « 0 » à « 1 ». Simultanément, le décompteur 109 commence à recevoir à son entrée CK, par l'intermédiaire de la porte ET 110, le signal de synchronisation Sy émis à chaque demi-tour moteur. La porte ET 71 dont le conducteur 38c est à « 1 » laisse alors passer les z impulsions fournies par le séquenceur 30 de la figure 1.

Comme indiqué dans le EP-A-0 043 053 précité, ces z impulsions viennent corriger l'avance à l'allumage élaborée par le calculateur et, suivant le type de moteur considéré, ces corrections peuvent être soit positives pour augmenter l'avance, soit négatives pour la diminuer. Le signe de la correction est programmé définitivement dans chaque calculateur lors du masquage de ce dernier.

Ces corrections d'avance sont produites à chaque allumage jusqu'à ce que la sortie Q du décompteur 109 revienne à zéro, après quoi les impulsions z ne sont plus transmises à travers la porte ET 71. La remise à zéro de la sortie Q intervient soit au bout de n demi-tours moteur, le contenu initial n du décompteur 109 ayant été décompté jusqu'à zéro, soit lorsque le régime du moteur dépasse à nouveau ω₁, ce qui se traduit par l'application d'un « 1 » par l'inverseur 112 à l'entrée R du décompteur 109.

Le contacteur 106 peut être remplacé par tout autre moyen approprié de détection de décélération du moteur, par exemple par une utilisation de l'information relative à la charge du moteur, les chiffres binaires B₁ et B₂ étant alors par exemple programmés dans la mémoire 53 en fonction de la vitesse et de la charge du moteur, et non plus en fonction de la seule vitesse.

**Revendications**

1. Dispositif de coupure de l'alimentation et de réalimentation en carburant pendant les phases de décélération d'un moteur à combustion interne à calculateur d'allumage électronique, comprenant un organe (103) d'interruption de l'alimentation en carburant du moteur, des moyens (49, 50) de mesure du régime du moteur, des moyens (106) détection de décélération du moteur, des moyens (53) de comparaison du régime ($\omega$) du moteur à au moins un premier seuil ($\omega_1$) et dont l'état logique de sortie ($B_1$) a la valeur « 1 » pour des régimes ($\omega$) inférieurs au seuil ($\omega_1$) et la valeur « 0 » pour des régimes supérieurs à ($\omega_1$) un circuit logique (100-102) qui reçoit, d'une part, l'état logique de sortie des moyens de comparaison (53) et, d'autre part, un signal logique représentatif d'un fonctionnement en décélération ou non du moteur délivré par les moyens (106) de détection de décélération et qui commande l'interruption de l'alimentation du moteur par l'organe d'interruption (103) lorsque le régime ($\omega$) du moteur est supérieur audit seuil ($\omega_1$) et que le moteur est en décélération et la réalimentation en carburant du moteur lorsque son régime ($\omega$) descend au-dessous du premier seuil ($\omega_1$), caractérisé en ce que lesdits moyens de comparaison sont constitués par une mémoire morte (53) de cartographie d'avance du calculateur électronique d'angle d'avance à l'allumage comprenant lesdits moyens (49, 50) de mesure de la vitesse du moteur, qui contient à chaque emplacement adressable en fonction de la vitesse du moteur un nombre binaire pour le calcul de l'angle d'avance à l'allumage et au moins un premier chiffre binaire ($B_1$) dont la valeur définit ledit état logique appliqué au circuit logique (100-102).

2. Dispositif suivant la revendication 1, caractérisé en ce que le circuit logique (100-102) reçoit des moyens de comparaison (53) un second état logique fonction de la comparaison entre le régime du moteur ($\omega$) et un second seuil ($\omega_2$) supérieur au premier seuil ($\omega_1$) et, défini par un second chiffre binaire ($B_2$) également emmagasiné à chaque emplacement de la mémoire morte (53) contenant un nombre binaire et en ce que ledit circuit logique est adapté pour n'autoriser l'interruption de l'alimentation du moteur par ledit organe d'interruption (103) entre les premier et second seuils ($\omega_1$, $\omega_2$) qu'en réponse à la détection du passage du moteur d'une phase d'accélération à une phase de décélération par lesdits moyens (106) de détection de décélération.

3. Dispositif suivant la revendication 2, caractérisé en ce que le circuit logique comprend une bascule D (100) aux entrées R et S de laquelle sont appliqués lesdits chiffres binaires ($B_1$, $B_2$), dont l'entrée d'horloge (CK) reçoit des moyens (106) de détection de décélération le niveau logique représentatif d'un fonctionnement du moteur en décélération ou non et dont l'entrée D reçoit un niveau logique prédéterminé.

4. Dispositif selon la revendication 3, caractérisé en ce que le second chiffre binaire ($B_2$) présente la valeur binaire (« 1 ») pour tous les régimes moteur supérieurs au second seuil ($\omega_2$) et la valeur binaire (« 0 ») pour tous les régimes moteur inférieurs au second seuil ($\omega_2$).

5. Dispositif selon l'une quelconque des revendications 3 et 4, caractérisé en ce que ladite bascule D (100) est connectée à un étage de puissance (102) pour l'actionnement dudit organe d'interruption (103) par l'intermédiaire d'une porte NAND (101 dont une première entrée (101a) est connectée à la sortie Q de la bascule D (100) et dont la seconde entrée (101b) est connectée à l'entrée d'horloge (CK) de la bascule et reçoit desdits moyens (106) de détection de décélération le niveau logique représentatif d'un fonctionnement du moteur en décélération ou non.

6. Dispositif selon l'une quelconque des revendications 1 à 5, caractérisé en ce qu'il comprend un deuxième circuit logique (108-112) commandé par ledit premier chiffre binaire ($B_1$) pour modifier l'avance à l'allumage calculée à partir desdits nombres binaires de la mémoire morte (53) lorsque le moteur est réalimenté en carburant au moment où le régime devient inférieur audit premier seuil ($\omega_1$).

7. Dispositif selon la revendication 6, caractérisé en ce que le deuxième circuit logique comprend un décompteur (109) qui est préchargé à une valeur prédéterminée (n), dont la sortie (Q) passe à un niveau logique autorisant la transmission d'impulsions de correction d'avance dans ledit calculateur, et dont le contenu (n) est décompté par un signal de synchronisation ($S_y$) émis par ledit calculateur en synchronisme avec la rotation du moteur, lorsque le premier chiffre binaire ($B_1$) passe d'une première valeur binaire représentative d'un régime moteur ($\omega$) supérieur au premier seuil ($\omega_1$) à une seconde valeur binaire représentative d'un régime moteur ($\omega$) inférieur au premier seuil ($\omega_1$), ladite sortie (Q) du décompteur (109) étant ramenée à un niveau logique interdisant la transmission desdites impulsions de correction lorsque le contenu du décompteur (109) a été décompté jusqu'à zéro ou lorsque le premier chiffre binaire ($B_1$) passe de la seconde valeur à la première valeur représentative d'un régime moteur ($\omega$) supérieur au premier seuil ($\omega_1$).

8. Dispositif selon l'une quelconque des revendications 1 à 3, caractérisé en ce que les moyens de détection de décélération du moteur sont constitués, comme connu en soi, par un contact électrique (106) de détection d'une position sensiblement fermée du papillon des gaz du moteur ou pied-levé d'une pédale d'accélérateur commandant ledit papillon.

9. Dispositif, selon l'une quelconque des revendications 1 à 8 caractérisé en ce que ledit calculateur d'allumage comprend des moyens (56, 57, 61) de mesure de la charge du moteur, une première mémoire morte (53) de coefficients d'avance adressable en fonction du régime et de la charge du moteur, une seconde mémoire morte (54) d'avance pleine charge adressable en fonction du régime du moteur, des moyens (50, 51, 52) d'adressage des première et seconde mémoires mortes (53, 54) à partir des moyens de mesure (49, 50, 56, 57, 61), des moyens (62, 74) de calcul de l'angle d'avance à l'allumage à partir des valeurs de coefficient d'avance et d'avance pleine charge lues dans les première et seconde mémoires mortes (53, 54) respectivement et un aiguilleur (67) interposé entre la première mémoire morte (53) et les moyens de calcul, et en ce que chaque chiffre binaire ($B_1$, $B_2$) dont la valeur définit l'état logique de sortie desdits moyens de comparaison est mémorisé à un emplacement de la première mémoire morte (53) contenant un coefficient d'avance et est appliqué audit circuit logique (100, 102) par l'intermédiaire de l'aiguilleur (67).

**Claims**

1. Apparatus for cutting off the feed of fuel and resuming the feed of fuel during the deceleratingphases of an internal combustion engine with electronic ignition calculating means, comprising a member (103) for interrupting the feed of fuel to the engine, means (49, 50) for measuring the operating condition of the engine, means (106) for detecting deceleration of the engine, means (53) for comparing the operating condition ($\omega$) of the engine to at least one first threshold ($\omega_1$) and whose logic output state ($B_1$) is of a value « 1 » for operating conditions ($\omega$) lower than the threshold ($\omega_1$) and the value « 0 » for operating conditions higher than ($\omega_1$), a logic circuit (100-102) which receives on the one hand the logic output state of the comparison means (53) and on the other hand a logic signal representative of operation in a deceleration or non-deceleration mode of the engine, supplied by the deceleration detection means (106), and which controls the interruption in the feed to the engine by the interruption member (103) when the operating condition ($\omega$) of the engine is higher than said threshold ($\omega_1$) and the engine is in a deceleration mode and resumes the supply of fuel to the engine when its operating condition ($\omega$) drops below the first threshold ($\omega_1$), characterised in that said comparison means comprise a read only memory (53) for mapping advance of the electronic calculating means for the ignition advance angle comprising said means (49, 50) for measuring the speed of the engine, which contains at each addressable location in dependence on the speed of the engine a binary number for calculating the ignition advance angle and at least one first binary digit ($B_1$) whose value defines said logic state applied to the logic circuit (100-102).

2. Apparatus according to claim 1 characterised in that the logic circuit (100-102) receives from the comparison means (53) a second logic state which is a function of the comparison between the operating condition of the engine ($\omega$) and a second threshold ($\omega_2$) which is higher than the first threshold ($\omega_1$) and defined by a second binary digit ($B_2$) also stored at each location in the read only memory (53) containing a binary number and that said logic circuit is adapted to authorise interruption in the feed to the engine by said interruption member (103) between the first and second thresholds ($\omega_1$, $\omega_2$) only in response to detection of the engine passing from an acceleration phase to a deceleration phase, by said deceleration detection means (106).

3. Apparatus according to claim 2 characterised in that the logic circuit comprises a D-type flip-flop (100), to the inputs R and S of which are applied said binary digits ($B_1$, $B_2$), whose clock input (CK) receives from the deceleration detection means (106) the logic level representative of operation of the engine in a deceleration or a non-deceleration mode and whose input D receives a predetermined logic level.

4. Apparatus according to claim 3 characterised in that the second binary digit ($B_2$) is of the binary value (« 1 ») for all the engine conditions higher than the second threshold ($\omega_2$) and the binary value (« 0 ») for all the engine conditions lower than the second threshold ($\omega_2$).

5. Apparatus according to any one of claims 3 and 4 characterised in that said D-type flip-flop (100) is connected to a power stage (102) for actuation of said interruption member (103) by way of a NAND-gate (101) of which a first input (101a) is connected to the Q-output of the D-type flip-flop (100) and whose second input (101b) is connected to the clock input (CK) of the flip-flop and receives from said deceleration detection means (106) the logic level representative of operation of the engine in a deceleration or a non-deceleration mode.

6. Apparatus according to any one of claims 1 to 5 characterised in that it comprises a second logic circuit (108-112) which is controlled by said first binary digit ($B_1$) to modify the ignition advance calculated from said binary numbers of the read only memory (53) when the engine is supplied with fuel again at the moment at which the engine condition falls below said first threshold ($\omega_1$).

7. Apparatus according to claim 6 characterised in that the second logic circuit comprises a down counter (109) which is preloaded to a predetermined value (n) and whose output (Q) goes to a logic level permitting the transmission of pulses for advance correction in said calculating means and whose content (n) is counted down by a synchronisation signal ($S_y$) emitted by said calculating means synchronously with the rotation of the engine when the first binary digit ($B_1$) passes from a first binary value representative of an engine condition ($\omega$) higher than the first threshold ($\omega_1$) to a second binary value representative of an engine condition ($\omega$) lower than the first threshold ($\omega_1$), said output (Q) of the down counter (109) being returned to a logic level inhibiting the transmission of said correction pulses when the content of the counter (109) has been counted down to zero or when the first binary digit (B₁) passes from the second value to the first value representative of an engine condition (ω) higher than the first threshold (ω₁).

8. Apparatus according to any one of claims 1 to 3 characterised in that the engine deceleration detection means are formed, as is known per se, by an electrical switch (106) for detecting a substantially closed position of the throttle butterfly valve of the engine or the foot-off position of an accelerator pedal controlling said butterfly valve.

9. Apparatus according to any one of claims 1 to 8 characterised in that said ignition calculating means comprises means (56, 57, 61) for measuring the load on the engine, a first read only memory (53) for advance coefficients which is addressable in dependence on the operating condition and the load of the engine, a second read only memory (54) for full load advance which is addressable in dependence on the operating condition of the engine, means (50, 51, 52) for addressing the first and second read only memories (53, 54) from the measuring means (49, 50, 56, 57, 61), means (62, 74) for calculating the ignition advance angle from the advance coefficient and full load advance values which are read from the first and second read only memories (53, 54) respectively and a switching means (67) interposed be tween the first read only memory (53) and the calculating means, and that each binary digit (B₁, B₂) whose value defines the output logic state of said comparison means is stored at a location in the first read only memory (53) containing an advance coefficient and is applied to said logic circuit (100, 102) by way of the switching means (67).

## Patentansprüche

1. Einrichtung zur Abschaltung und Zuschaltung der Kraftstoffzufuhr im Schubbetrieb eines Verbrennungsmotors mittels eines elektronischen Zündrechners, der ein Teil (103) zur Abschaltung der Kraftstoffzufuhr zum Motor aufweist, eine Anordnung (49, 50) zur Messung der Motordrehzahl, eine Anordnung (106) zur Feststellung einer Verzögerung des Motors, eine Anordnung (53) zum Vergleichen der Motordrehzahl ω mit wenigstens einem ersten Schwellwert ω₁, deren logischer Ausgangszustand B₁ den Wert 1 aufweist für Drehzahlen ω kleiner als der Schwellwert ω₁ und den Wert Null aufweist für Drehzahlen größer als ω₁, einen logischen Schaltkreis (100 bis 102), dem einerseits der logische Ausgangszustand der Vergleicheranordnung (53) zugeführt wird und andererseits ein logisches Signal, das den Verzögerungsbetrieb des Motors oder nicht darstellt und von der Feststellanordnung (106) für die Verzögerung geliefert wird und das die Abschaltung des Motors mittels des Abschaltteils (103) bewirkt, wenn die Drehzahl ω des Motors größer als der Schwellwert ω₁ ist und der Motor im Verzögerungsbetrieb läuft sowie die Zuschaltung des Kraftstoffs zum Motor bewirkt, wenn dessen Drehzahl ω unter den ersten Schwellwert ω₁ abfällt, dadurch gekennzeichnet, daß die Vergleicheranordnung aus einem Totspeicher (53) zur Speicherung des Vorwinkels der Zündung des elektronischen Rechners besteht und die Meßanordnung (49, 50) für die Motorgeschwindigkeit aufweist, die auf jedem als Funktion der Motorgeschwindigkeit adressierbaren Feld eine Binärzahl zur Berechnung des Vorzündwinkels enthält und wenigstens eine erste binäre Ziffer B₁, dessen Wert den logischen Zustand darstellt, der dem logischen Schaltkreis (100 bis 102) zugeführt wird.

2. Einrichtung nach Anspruch 1, dadurch gekennzeichnet, daß der logische Schaltkreis (100 bis 102) von der Vergleicheranordnung (53) einen zweiten logischen Zustand erhält, der eine Funktion des Vergleichs zwischen der Motordrehzahl ω und einem zweiten Schwellwert ω₂ ist, der größer als der erste Schwellwert ω₁ ist und durch eine zweite binäre Ziffer B₂ dargestellt wird, die ebenfalls in jedem Feld des eine Binärzahl enthaltenden Totspeichers (53) gespeichert ist und daß der logische Schaltkreis derart ausgelegt ist, daß er die Abschaltung des Motors durch das Abschaltteil (103) zwischen den beiden Schwellwerten ω₁, ω₂ nur als Funktion der Messung des Übergangs des Motors von einer Beschleunigungsphase zu einer Verzögerungsphase durch die Anordnung (106) zur Feststellung der Verzögerung ermöglicht.

3. Einrichtung nach Anspruch 2, dadurch gekennzeichnet, daß der logische Schaltkreis eine Flip-Flop-Schaltung D (100) aufweist, deren Eingängen R und S die Binärziffern B₁, B₂ zugeführt werden, deren Zeiteingang CK von der Anordnung (106) zur Feststellung der Verzögerung ein logischer Pegel zugeführt wird, der den Betrieb des Motors in der Verzögerungsphase oder nicht darstellt und dessen Eingang D einen vorgegebenen logischen Pegel erhält.

4. Einrichtung nach Anspruch 1, dadurch gekennzeichnet, daß die zweite Binärziffer B₂ den Binärwert 1 darstellt für alle Motordrehzahlen oberhalb des zweiten Schwellwerts ω₂ und den Binärwert 0 darstellt für alle Motordrehzahlen unterhalb des zweiten Schwellwertes ω₂.

5. Einrichtung nach einem der Ansprüche 3 und 4, dadurch gekennzeichnet, daß die Flip-Flop-Schaltung D (100) mit einer Leistungsstufe (102) verbunden ist zur Betätigung des Abschaltteils (103) mittels einer Torschaltung NAND (101), deren erster Eingang (101a) mit dem Ausgang Q der Flip-Flop-Schaltung D (100) verbunden ist und deren zweiter Eingang (101b) mit dem Zeiteingang CK des Flip-Flops verbunden ist und von der Anordnung (106) zur Feststellung der Verzögerung den logischen Pegel erhält, der den Betrieb des Motors in der Verzögerungsphase oder nicht darstellt.

6. Einrichtung nach einem der Ansprüche 1 bis 5, dadurch gekennzeichnet, daß sie einen zweiten logischen Schaltkreis (108 bis 112) aufweist, der von der ersten Binärziffer B₁ gesteuert wird um die berechnete Vorzündung zu verändern ausgehend von den Binärzahlen des Totspeichers (53).

wenn die Kraftstoffzuschaltung für den Motor wieder erfolgt zum Zeitpunkt, zu dem die Motordrehzahl kleiner als der erste Schwellwert $\omega_1$ ist.

7. Einrichtung nach Anspruch 6, dadurch gekennzeichnet, daß der zweite logische Schaltkreis einen Zähler (109) aufweist, der mit einem vorgegebenen Wert n vorgeladen wird und dessen Ausgang Q einen logischen Pegel annimt, der die Übertragung von Korrekturimpulsen für die Vorzündung in den Rechner ermöglicht und dessen Inhalt n ausgelesen wird durch ein Sychronisationssignal $S_y$, das vom Rechner synchron mit der Motorumdrehung abgegeben wird, wenn die erste Binärziffer $B_1$ von einem ersten Binärwert, der einer Motordrehzahl $\omega$ entspricht, die größer ist als der erste Schwellwert $\omega_1$ zu einem zweiten Binärwert übergeht, der einer Motordrehzahl $\omega$ kleiner als dem ersten Schwellwert $\omega_1$ entspricht, wobei der Ausgang Q des Zählers (109) einen logischen Pegel annimmt, der die Übertragung der Korrekturimpulse verhindert, wenn der Inhalt des Zählers (109) auf Null gebracht wurde oder wenn die erste Binärziffer $B_1$ vom zweiten Wert zum ersten Wert entsprechend einer Motordrehzahl $\omega$ größer als der erste Schwellwert $\omega_1$ übergeht.

8. Einrichtung nach einem der Ansprüche 1 bis 3, dadurch gekennzeichnet, daß die Anordnung zur Feststellung der Verzögerung des Motors in an sich bekannter Weise aus einem elektrischen Kontakt (106) besteht zur Feststellung einer im wesentlichen geschlossenen Stellung der Drosselklappe des Motorvergasers oder des Freigebens eines diese Drosselklappe steuernden Beschleunigungspedals.

9. Einrichtung nach einem der Ansprüche 1 bis 8, dadurch gekennzeichnet, daß der Zündrechner eine Anordnung (56, 57, 61) zur Messung der Motorlast aufweist, einen ersten Totspeicher (53) für Vorzündungskoeffizienten, die als Funktion der Drehzahl und der Last des Motors adressierbar sind, einen zweiten Totspeicher (54) für die Vorzündung bei Vollast, der als Funktion der Motordrehzahl adressierbar ist, eine Anordnung (50, 51, 52) zum Adressieren des ersten und zweiten Totspeichers (53, 54) ausgehend von der Meßanordnung (49, 50, 56, 57, 61), eine Rechenanordnung (62, 74) für den Vorzündungswinkel ausgehend von den Werten der Vorzündungskoeffizienten und der Vollastvorzündung in den beiden entsprechenden Totspeichern (53, 54) sowie eine Auswahlstufe (67) aufweist, die zwischen den ersten Totspeicher (53) und die Rechenanordnung eingesetzt ist und daß jede Binärziffer $B_1$, $B_2$, deren Wert den logischen Ausgangszustand der Vergleicheranordnung darstellt, in einem Feld des ersten Totspeichers (53) gespeichert ist und einen Vorzündungskoeffizienten enthält, der dem logischen Schaltkreis (100, 102) über die Auswahlstufe (67) zugeführt wird.

FIG_1

FIG_2

FIG.3

0 155 425